Europäisches Patentamt

(19) European Patent Office

Office européen des brevets

(11) Publication number: **0 208 769 B1**

(12) **EUROPEAN PATENT SPECIFICATION**

(45) Date of publication of patent specification: **26.08.92**   (51) Int. Cl.⁵: **H05B 6/64**, G05D 22/00, A47J 27/04

(21) Application number: **86900905.0**

(22) Date of filing: **08.01.86**

(86) International application number:
**PCT/US86/00035**

(87) International publication number:
**WO 86/04206 (17.07.86 86/17)**

(54) **METHOD AND APPARATUS FOR WATER VAPOR CONTROL IN CONVECTION OVENS.**

(30) Priority: **08.01.85 US 689654**

(43) Date of publication of application:
**21.01.87 Bulletin 87/04**

(45) Publication of the grant of the patent:
**26.08.92 Bulletin 92/35**

(84) Designated Contracting States:
**AT BE CH DE FR GB IT LI LU NL SE**

(56) References cited:
**US-A- 3 424 231      US-A- 3 825 723**
**US-A- 3 972 277      US-A- 4 010 349**
**US-A- 4 154 861      US-A- 4 426 923**

(73) Proprietor: **Patentsmith II, Inc.**
**2051 Valley View Lane**
**Farmers Branch Texas 75234(US)**

(72) Inventor: **SMITH, Donald, P.**
**4530 Woodfin Drive**
**Dallas, TX 75220(US)**

(74) Representative: **Howick, Nicholas Keith et al**
**CARPMAELS & RANSFORD 43 Bloomsbury**
**Square**
**London WC1A 2RA(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to water vapour control in convection ovens, and particularly to a method of controlling the water vapour content of recirculating air in a∘ convection oven for food products having an initial temperature and which food products are heat treated to a final temperature and in the course of the treatment are moved in the oven on a conveyor, said method comprising the steps of: controlling the temperature of said recirculating air to be at or above the desired final surface temperature for food products; and directing said recirculating air towards the surface of a food product, as well as a convection oven for increasing the temperature of food products in said oven from an initial temperature to a desired higher final temperature, said oven comprising:

(a) conveyor means for moving said food products in the oven;

(b) means for circulating air within said oven; and

(c) means for controlling the temperature of said air to be at or above the desired final temperature of said food products.

Prior art convection ovens are disclosed in US-A-4492839 and US-A-4154861. Furthermore, an apparatus for regulating the environment surrounding a food product is known from US-A-3424231.

The need need for controlling the moisture content of food products during cooking is well known. This need is especially important when food products are baked relatively quickly at high temperatures. Under cooking or sogginess may result where the moisture content of the food products remains too high during cooking. Conversely, blistering, shrinking or over-browning may occur where too much moisture is removed from the surface of food products during baking.

Although methods and apparatus have previously been developed for controlling the moisture of food products in closed systems, such methods have typically relied upon the experience and skill of operators in controlling the temperature and humidity within desired limits determined largely by trial and error for particular food products.

Controlling the moisture content of food products during baking is even more difficult in the conveyorized convection ovens that are used commercially. With such ovens it is not only important to control the moisture content so as to achieve uniformity and high quality in the food products, but also to achieve those results with the least necessary expenditure of energy.

US-A-3972277 discloses a defrosting apparatus and method which includes use of a reservoir of water which can be heated to generate air of a variety of different temperatures and vapour contents. The air temperature exceeds the temperature of the product, since a defrosting operation is taking place, and of the water in the reservoir. Thermostats are provided for controlling the temperature of the air and of the water in the reservoir.

US-A-4154861 discloses a microwave oven including jets for passing hot air over a product in the oven; this apparatus does not include a liquid reservoir to enable humidity to be controlled.

According to the invention, there is provided a method of controlling the water vapour content of recirculating air in a convection oven for food products having an initial temperature and which food products are heat treated to a final temperature and in the course of the treatment are moved through the oven on a conveyor, said method comprising the steps of: controlling the temperature of said recirculating air to be at or above the desired final surface temperature for food products; and directing said recirculating air towards the surface of a food product, characterised by the steps of contacting said recirculating air with the surface of water in a water reservoir; controlling the temperature of the water within said reservoir to be at a level above the initial temperature of said food products and below the temperature of said air to maintain the water vapour content of the air substantially equal to or less than that of air saturated with water vapour such that moisture carried by said recirculating air condenses onto the surface of a food product to provide rapid initial heating.

According to a further aspect of the invention, there is provided a convection oven for increasing the temperature of food products in said oven from an initial temperature to a desired higher final temperature, said oven comprising:

(a) conveyor means for moving said food products through the oven;

(b) means for circulating air within said oven; and

(c) means for controlling the temperature of said air to be at or above the desired final temperature of said food products; characterised by further comprising

(d) a water reservoir;

(e) means for controlling the temperature of water within said reservoir;

(f) means for sequentially contacting said temperature controlled air with said water and with said food products; and

(g) means for continuously controlling the temperature of water within said reservoir to be at a level above the initial temperature of said food products and below the temperature of said air to maintain the water vapour content of the air at a level substantially equal to or less than that of air saturated with water vapour, such that moisture carried by said recirculating air condenses onto the surface of a food product to provide rapid initial heating.

These and other advantages and improvements of the method and apparatus dislcosed herein are better understood and appreciated by reference to the aforementioned Patents and to the description below when considered in conjunction with the following figures of the drawings, wherein:

Figures 1 and 2 are diagrams illustrating the water content of air at various temperatures;

Figure 3 is a diagrammatic perspective view of a conveyorized tunnel oven employing microwave and surface heating apparatus for heating a product as it is successively moved through a plurality of compartments;

Figure 4 is a fragmentary perspective view of the interior of a cooking chamber and a partition between adjacent chambers;

Figure 5 is a cross-sectional view taken along line 3-3 of Figure 3.

Figures 6 and 7 is an elevation view of the oven, parts being broken away to more clearly illustrate details of construction;;

Figure 8 is a top plan view of the oven, parts being broken away to more clearly illustrate details of construction;

Figure 9 is a diagrammatic view illustrating the control system;

Figure 10 is a front elevation view, partially in section, of a conveyorized, forced convection oven employing impingement heating together with the water or humidity control reservoir of the invention; and

Figures 11 and 12 depict experimental data supporting the benefit derived through use of the present invention.

Control of the water vapor content of air within a convection oven, even at temperatures above the boiling point of water, is often very important for achieving desired heat transfer and product surface effects. The water vapor content of air in the oven relative to the water content of saturated air (relative humidity) is also very important to heat transfer and surface effects. There is a marked difference in results between controlled water vapor content and so-called atmospheric steaming or heating with super-heated steam.

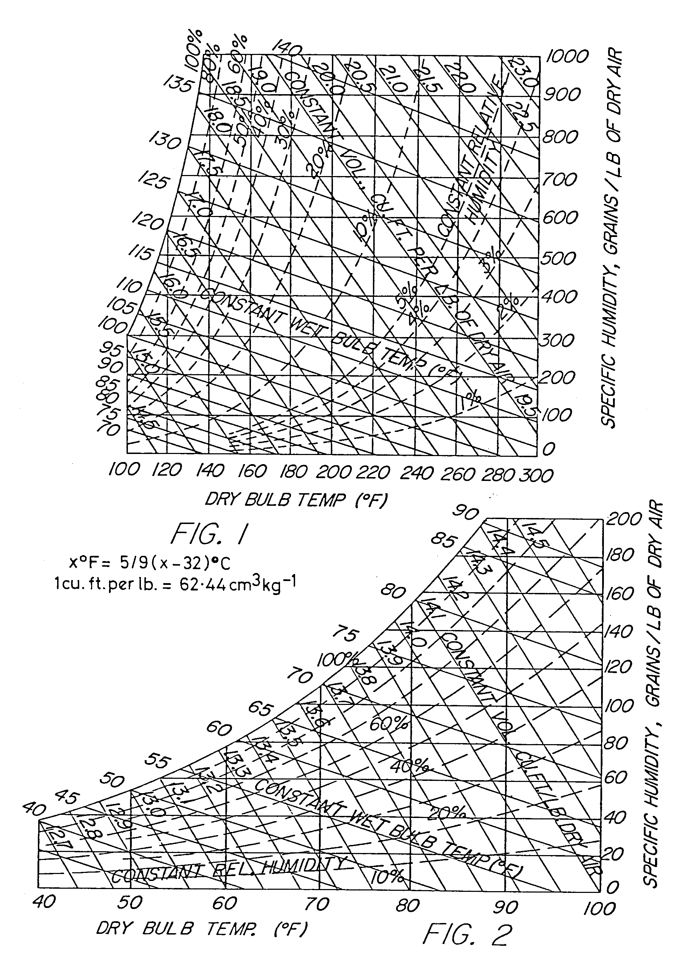

Some of the effects are illustrated by proofed bread dough at temperature of 36.7°C (100°F). entering an oven at 176.7°C (350°F). in which the water vapor content is equivalent to air saturated with water vapor at 76.7°C (170°F). When cold dough enters the oven, water vapor condenses on the surface, giving rapid uniform heat transfer and surface moistening. The degree of heat transfer and moistening is very responsive to the amount of water vapor in the air and in the temperature range between 36.7°C (100°F.) and boiling water. This water content increases extremely as the temperature increases. Figures 1 and 2 illustrate the water content of saturated air.

For products such as French breads, the moisture condensation on the surface assists formation of the smoothly glazed crust. As the bread bakes, the surface is heated above the boiling point of water and the condensed water is evaporated. Upon further heating the dry crust is formed and then is finally heated sufficiently to become crisp and brown.

Another example is in the heating of broiled fish or heating for serving of pre-prepared meals. The rapid initial heating of condensing water vapor is advantageous but the surface of the product when heated properly needs to be moist, but neither wet nor dry, i.e., not heated above the boiling point of water. If air temperatures are above the boiling point of water, points of food or the thin sections over bubbles or other low heat capacity areas become dried. Extreme drying give poor texture, shrunken skins or other objectionable results.

Two devices disclosed herein illustrate these effects advantageously.

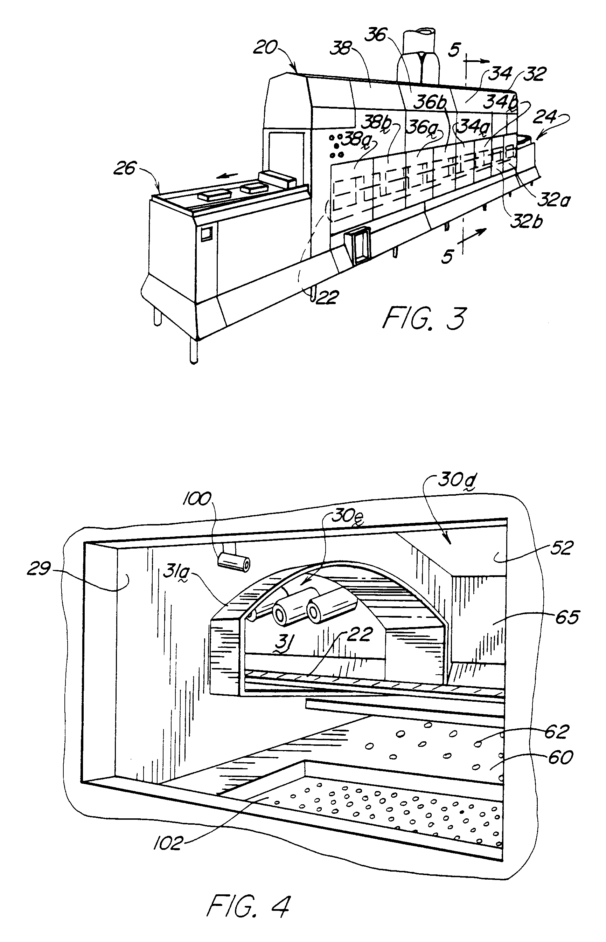

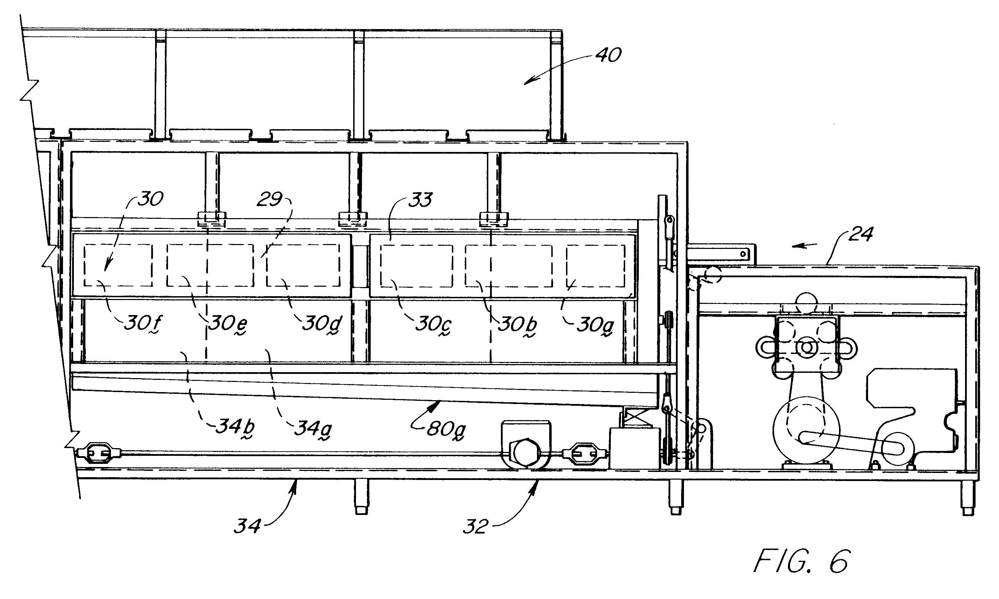

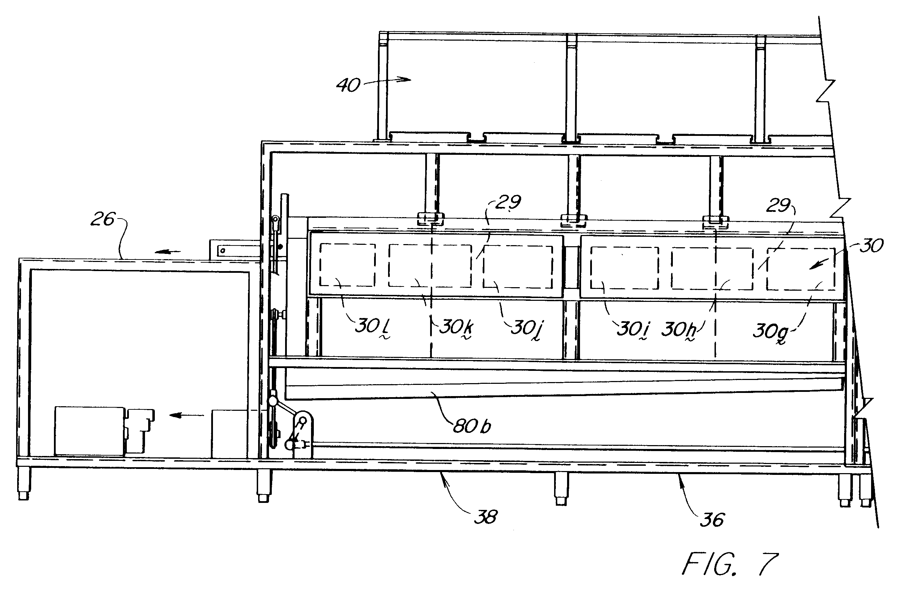

Referring to Figure 3 of the drawing, the numeral 20 generally designates a conveyorized tunnel oven having a conveyor 22 extending from an entrance end 24 to the exit end 26. As will be hereinafter more fully explained, the interior of the oven is provided with an elongated heating chamber 28 divided by partitions 29 to form a plurality of heating cavities 30a-30l, as best illustrated in Figures 6 and 7.

In the particular embodiment of the invention illustrated in Figures 3, 6 and 7 of the drawing, the oven is of modular construction and comprises entrance section 32, two intermediate sections 34 and 36 and a delivery or exit section 38.

Entrance section 32 has a vertically swinging door 33 pivotally secured to a side wall of the oven for sealing cavities 30a, 30b and 30c. Vertically swinging doors 35, 37 and 39 are similarly mounted to close cavities 30d, 30e and 30f of intermediate section 34; cavities 30g, 30h and 30i of intermediate section 36; and cavities 30j, 30k and 30l of delivery section 38.

Horizontally swinging doors 32a and 32b are hingedly secured to opposite ends of the entrance section 32 and cover the vertically swinging door 33. Horizontally swinging doors 34a cover vertically swinging door 35; horizontally swinging doors 36a and 36b cover vertically swinging door 37 and horizontally swinging doors 38a and 38b cover vertically swinging door 39.

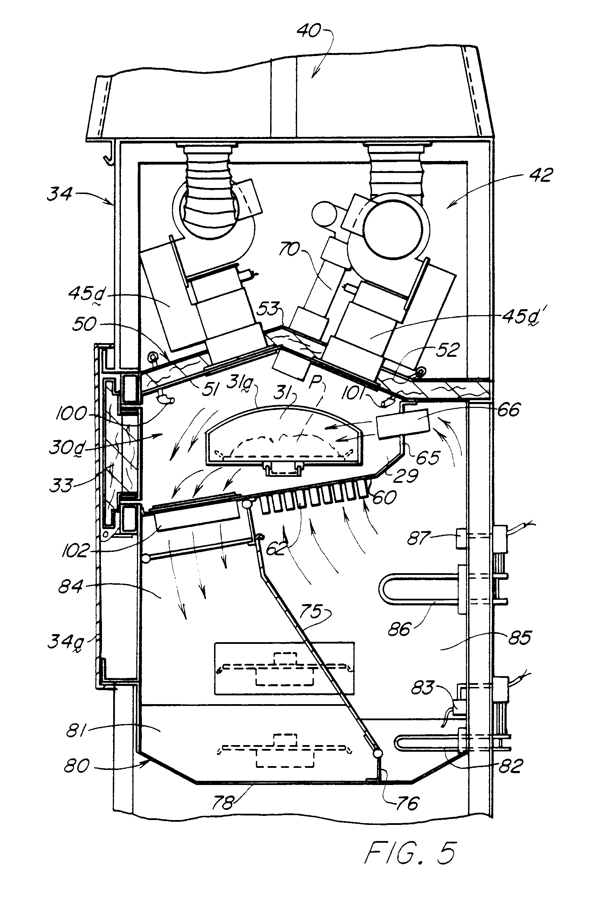

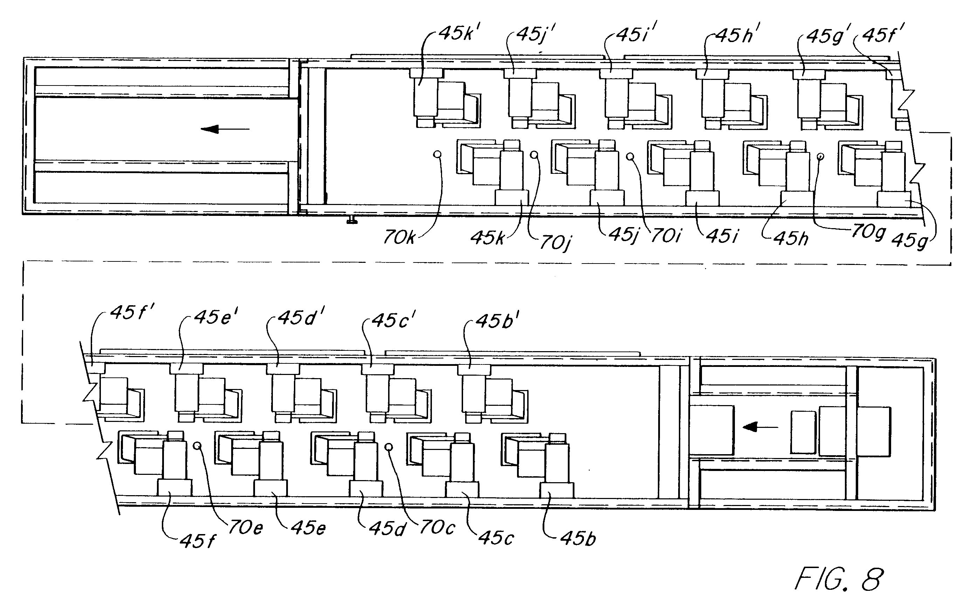

As best illustrated in Figures 5 through 8 a magnetron chamber 40 extends along the entire upper portion of the oven and is provided with forced circulation of filtered air to provide cooling for the electrical circuitry of magnetrons housed therein. The magnetrons for radiating microwave energy for heating the product are spaced as illustrated in Figure 8 such that two magnetrons deliver microwave energy into each of the cavities 30b-30k. As will be hereinafter more fully explained, microwave energy is not delivered into entrance cavity 30a or into delivery cavity 30l.

A pair of magnetrons 45b and 45b' deliver microwave energy into cavity 30b while magnetrons 45c and 45c' deliver microwave energy into cavity 30c.

As best illustrated in Figures 4 and 5 each cavity is separated from the adjacent cavity by a partition wall 29 having a passage 31 formed therein through which containers carrying the product to be heated are carried by the conveyor 22. A choke 31a extends around the periphery of opening 31 to minimize the escape of microwave energy from one cavity to the adjacent cavity. The width of opening 31 is approximately equal to the width of the conveyor 22 and the upper portion of opening 31 is curved to permit movement of food products therethrough while minimizing the area of the opening.

The cavity 30d is formed between segments 51 and 52 of a hip roof or top wall 50 having a ridge 53 extending longitudinally of the oven and defining the upper boundary of the heating chamber 28. The floor 60 of the heating chamber is perforated and tubes 62 having a length of at least about two times the diameter of the tube are positioned in communication with perforations in the floor 60 to form columnated jets of air which impinge against the lower surface of the container carrying the product through the oven, as will be hereinafter more fully explained. The back wall 65 of the conveyor has a plurality of tubes 66 extending therethrough for directing a flow of air over the surface of the product P.

The roof 50 and bottom wall 60 are secured to the front wall of the oven having openings formed therein closed by vertically swinging doors 33, 35, 37 and 39.

As will be hereinafter more fully explained, an infrared sensor 70 which is adapted to collect infrared energy emitted by the product and provides a "readout" of the temperature of the product. Infrared sensors of this type are commercially available from Mikron Instrument Company, Inc. of Ridgewood, New Jersey or from Wahl Instruments, Inc. of Culver City, California. Such devices are described in detail in Wahl Catalog No. W101D, Revision A and in Mikron M65 Infrared Temperature Measurement and Control Systems Catalog 65 Rev. 0, each of the catalogs being incorporated herein by reference in its entirety.

As best illustrated in Figure 8 infrared sensors 70c, 70e, 70g, 70i, 70j, and 70k sense the temperature of the product in cavities 30c, 30e, 30g, 30i, 30j, and 30k, respectively. The first heating cavity 30a is not provided with either magnetrons or infrared sensing devices. Magnetrons 45b and 45b' radiate microwave energy to heat a product in cavity 30b. However, an infrared sensor is not provided in cavity 30b, in the particular embodiment of the invention illustrated, since most products delivered through the oven will require at least some microwave heating. Infrared sensor 70c is provided in the third cavity 30c for sensing the temperature of the product and turning off the magnetrons 40c and 40c' when the surface temperature of the product reaches a predetermined level. Infrared sensor 70c also controls magnetrons 45d and 45d' in heating cavity 30d. Thus, in the illustrated embodiment, if the surface temperature of the product is not sufficiently high by the time the product leaves chamber 30c, the product will be heated in chamber 30d and sensor 70e will terminate heating of the product in chamber 30e if the surface temperature of the product has reached the predetermined level. The exit cavity 30l is not provided with microwave heating or an infrared sensor. However, cavities 30i, 30j, and 30k are each provided with infrared sensors to provide precision control of the final temperature of the product as it is moved through the heating chamber 28 by conveyor 22.

According to a preferred embodiment of the invention, the operation of magnetrons 45 and infrared sensors 70 is controlled through use of a microcomputer that is programmed with one or more thermal treatment cycles for use with various food products or combinations of food products. If desired, conveyor 22 can also be computer controlled so as to coordinate its operation with that of magnetrons 45 and sensors 70, thereby improving the overall efficiency of oven 20.

The particular conveyorized tunnel oven hereinbefore described is intended for heating or cooking 300 meals per hour and to provide a maximum of two minutes of heating time for each meal. The heating chamber is divided into ten cavities which are provided with microwave energy radiating magnetrons and the conveyor 22 is driven on a timed cycle to maintain the product in each cavity for a period of twelve seconds.

As best illustrated in Figures 5 through 7 a partition 75 extends downwardly from the floor 60 of the heating chamber and the lower end is supported by spaced support members 76 above the bottom 78 of water troughs 80a and 80b to permit flow of water laterally across trays 80a and 80b below partition 75.

A heating element 82 is provided for heating water in tray 80 and a thermostat control 83 is provided for controlling the heating element 82 for maintaining water in tray 80 at a precisely controlled temperature. Partition 75 divides the space below floor 60 and above the surface of water 81 in tray 80 into an air return duct 84 and a plenum 85. A heating element 86 is positioned in plenum 85 and is adapted to heat air flowing thereacross, heating element 86 being controlled by a thermostat 87 to maintain the air temperature in the plenum at a predetermined level.

A pair of water spray nozzles 100 and 101 are positioned adjacent opposite corners of each of the cavities 30 for spraying water through the cavity for the purpose of cleaning. The bottom wall 60 is inclined downwardly toward air return duct 84 and the floor 60 has openings formed in the perforated bottom of a tray 102 to permit flow of water sprayed from spray nozzles 100 and 101 to return through the return duct 84 to trays 80a and 80b. Since the level of water in the tray is above the lower edge of partition 75 grease and other matter floating on the surface of the water will not flow downwardly into the plenum 85. By maintaining the temperature of the water in tray 80 and the temperature of the air in the plenum at controlled levels the wet bulb temperature of air in plenum 85 and flowing into the cavities of the heating chamber is precisely controlled.

From the foregoing it should be readily apparent that by maintaining the temperature and relative humidity of the ambient atmosphere in the cavities of heating chamber at a predetermined wet bulb temperature to assure that the ambient atmosphere is substantially saturated, evaporation of moisture from the surface of the food product during the heating cycle will be minimized. It has been observed that evaporation of moisture from the surface of the product results in cooling of the surface of the product and results in an erroneous readout of the temperature of the surface of the product by infrared sensors 70. However, by preventing evaporation from the surface of the food product, the surface temperature of the product can be accurately determined by infrared sensors 70 and the temperature accurately controlled.

When a cold product moves into cavity 30a the tray and the product are immediately contacted by the warm moist air which results in condensation of liquid onto the surface of the product. Heat is immediately transferred to the surface of the product as a result of the latent heat of condensation and the moisture condensed onto the surface of the product prevents drying of the product as it is moved through the heating chamber.

The product will receive microwave energy in chamber 30b and the tray will be heated from the bottom by columnated jets of air flowing through tubes 62 which impinge against the lower surface of the tray. Air currents flowing through tubes 66 sweep across the upper surface of the product and the air flow is directed across the lens on the sight tube of infrared sensor 70 to prevent the formation of condensate on the lens surface which would result in an erroneous temperature reading.

As the product moves through the heating chamber from one cavity to another the delivery of microwave energy to the product will be terminated when the surface of the product reaches a predetermined temperature. As the product moves from one cavity to the other, each infrared sensor will sense the temperature of the product. If the product has not been uniformly heated throughout, heat will be conducted from the surface of the product to the center portion of the product which will result in cooling of the surface of the product and result in magnetrons in the subsequent cavities being energized when the cooling of the surface of the product is indicated by infrared sensors 70.

While the heating chamber 28 hereinbefore described has been divided into ten separate cavities for sequential heating of various products as required in each individual cavity, it should be appreciated that the entire process may be accomplished in a single cavity.

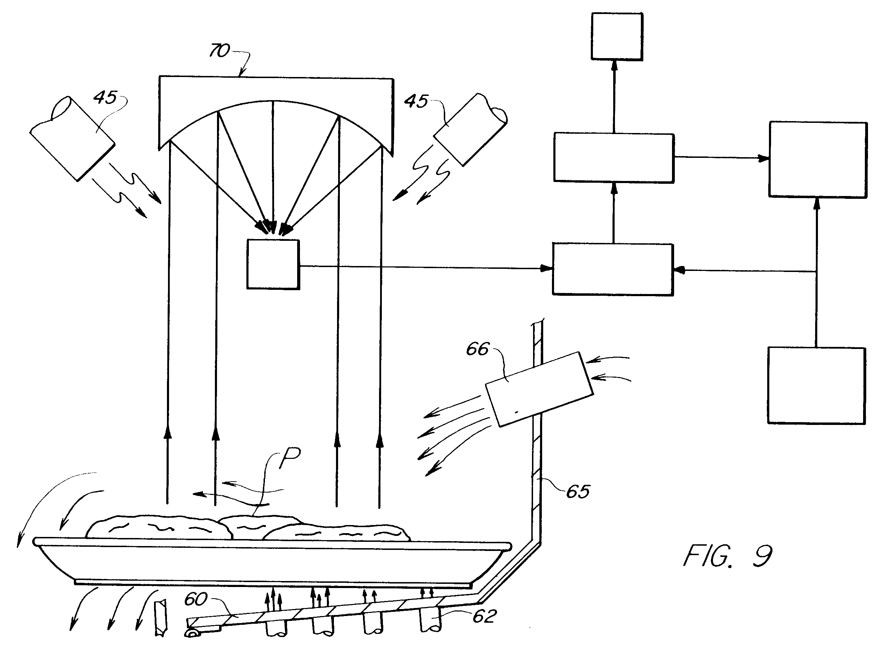

The Enersyst PFF-2 Food Finisher shown in Figures 3 through 9 has a large water reservoir under the conveyor which carries pre-prepared meals through a heating tunnel. The air which is directed onto the meals as they proceed through the tunnel is recirculated over the water reservoir. In use, the recirculated air temperature (dry bulb) is at 82,2°C (180°F). to aid heating of the meals and the plates. The temperature of the water in the reservoir is held at 62.8°C (145°F/.) In the closed system, the recirculating air would heat the water to nearly 82.2°C (180°F.) which would result in wet foods and wet plates. The temperature of the water in the reservoir is controlled by an electric heating element to initially warm it and then by thermostatically controlled addition of cold water to control the upper temperature limit. An alternative control is to introduce cool ambient air just prior to the area where the air passes over the water reservoir to control the water vapor content in the air by a combination of air cooling and evaporation cooling. This procedure expends energy by the equivalent air and water vapor which must be exhausted.

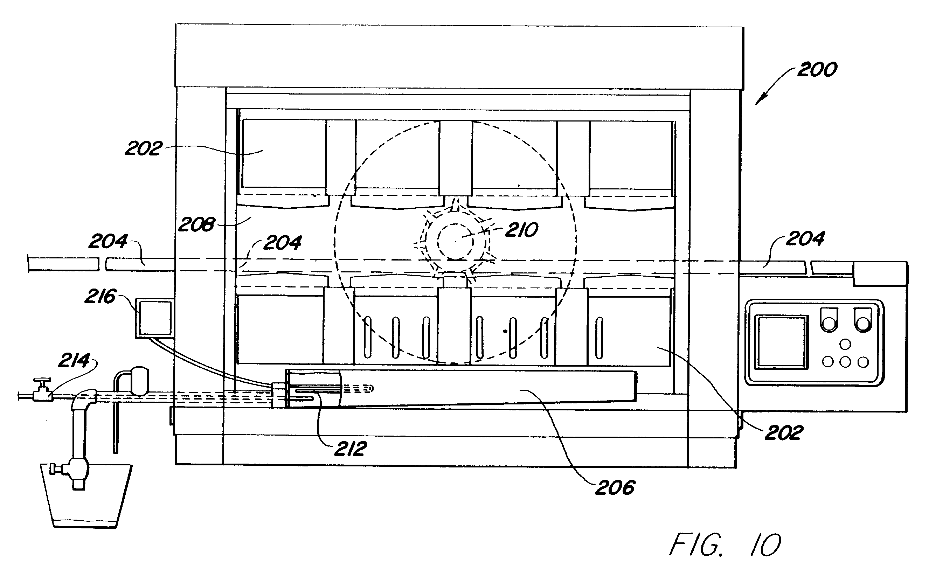

Another embodiment of this invention is in an electrically heated jet impingement oven as shown in Figure 10. In this oven, a temperature controlled water reservoir has jets of air which impinge on its surface to give very effective heat transfer and water vaporization.

It is important to record that this condensation heat transfer and the subsequent controlled surface conditioning is greatly enhanced by the application with jet impingement air-to-solid interface. In addition to the well known accelerated heat transfer, the condensation heat transfer is markedly enhanced by the fact that the air which remains after the water vapor condenses is rapidly swept away by the air jets so that fresh moisture-laden air contacts the surface. Additionally, when the product nears the end of the heating cycle the jets air drying by sweeping away the water vapor concentrated near the product surface. The accelerated air-to-solid heat transfer of the impinging jets also permits use of lower air temperatures to achieve desired final surface effects such as partial drying or browning and these lower temperatures make much more tolerant operation to avoid localized over-drying or over-heating.

Figure 10 depicts a front elevation view, partially in section, of conveyorized, forced convection oven 200 employing jet fingers 202 for impingement heating of food products disposed on conveyor 204. Figure 10 further depicts water reservoir 206 disposed beneath plenum 208 for recirculating heated air to jet fingers 202 within oven 200. A fan 210 is depicted in phantom for use in recirculating air through oven 200. Electric heaters 212 and an external water supply 214 are also shown in Figure 10 for use in conjuction with a control means 216 for controlling the temperature of water within water reservoir 206. Directors 218 are provided to increase air flow across reservoir 206.

In the oven of Figure 10, jets of air are directed at the surface of the water to give accelerated water vapor addition or subtraction as required to maintain the desired water vapor content of the recirculating air.

In a single recirculating air circuit, as in a single heating zone continuously fed conveyorized oven, the moisture-laden air from near the exit end of the oven can be recirculated to impinge on the cool incoming product to extract some of the energy of condensation before that air is passed over the water reservoir.

This "regeneration" cycle using the concentrated water vapor from the drying product to provide sensible heating and moisture addition to the incoming product can be a major factor of energy savings and product yield in moist products which are being cooled in such a continuous feed recirculating air heating system.

This regenerating water vapor recirculation can, theoretically, eliminate the need for the temperature controlled water reservoir. However, results or means of starting and stopping the continuous system without excess moistening or drying must be considered.

Direct fired gas heat ovens are not necessarily eliminated as disadvantageous in this controlled water vapor content and regenerative system. It is important that the flue losses be kept at reasonable minimum, but if the flue heat is used to preheat the combustion air, then the combustion air becomes the ambient air coolant which keeps the air in the oven from becoming too saturated.

In many food heating operations such as pastry or bread baking or cooling some meats, approximately as much energy is spent in evaporating water as in actually heating the product. The efficiency of the regenerative recirculation which is greatly enhanced by the jet impingement air-to-solid heat transfer can save much of this energy and, in some case, save food quality and marketable yield too.

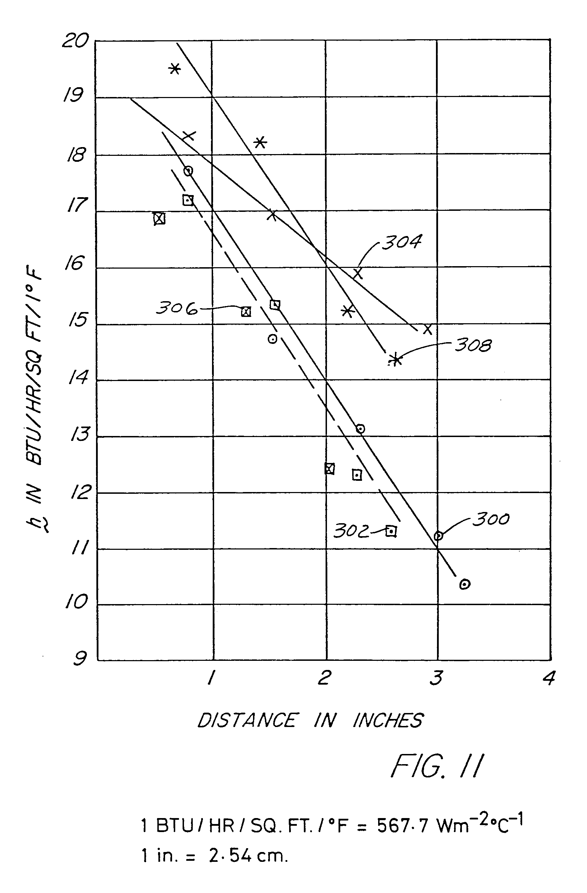

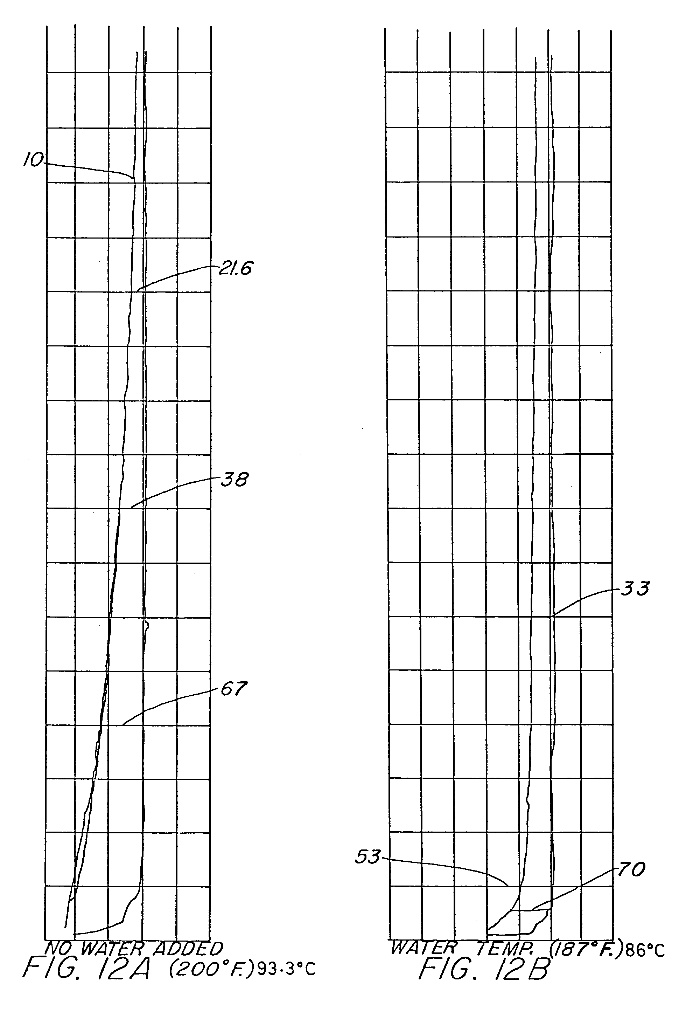

In Figures 11 and 12, the rate of heat transfer of the condensing water vapor, the following water evaporation and then the heating of the product above the temperature of the condensing water are shown in the comparative heating curves of temperature change in an aluminum plate heated by jets of air which in A has no added water vapor and which in B has water vapor added to nearly equilibrium with 86.1°C (187°F.) water and 93.3°C (200°F.) air temperature.

The rate of heat exchange in the first half minute of B is 613 $W/m^2/°C$ (108 BTU/Sq.Ft./Hr./°F). When the water starts to evaporate after the surface of the product (aluminum plate) reaches the water reservoir (wet bulb) temperature, the rate of heat input drops to the range of 28.4 $W/m^2/°C$ (5 BTU/Sq.Ft./Hr./°F).

For comparison, the rate of heat transfer in the dry air as shown in A is a nearly steady 85.155 $W/m^2/°C$ (15 BUT/Sq.Ft./Hr./°F).

Referring to Figure 11, data 300 are for electric high humidity oven without humidity added at 9.41 $ms^{-1}$ (1550 FPM). Data 302 are for Impinger 1000 with standard columnating plate at 11.24 $ms^{-1}$ (1850 FPM). Data 304 are for Impinger 1000 with improved columnating plate at 12.15 $ms^{-1}$ (2000 FPM). Data 306 are for Impinger II at 10.33 $ms^{-1}$ (1700 FPM). Data 308 are for FS 6.2-6 tube jets fired at 11.24 $ms^{-1}$ (1850 FPM).

## Claims

1. A method of controlling the water vapour content of recirculating air in a convection oven (20; 200) for food products having an initial temperature and which food products are heat treated to a final temperature and in the course of the treatment are moved through the oven on a conveyor (22; 204), said method comprising the steps of: controlling the temperature of said recirculating air to be at or above the desired final surface temperature for food products; and directing said recirculating air towards the surface of a food product, characterised by the steps of contacting said recirculating air with the surface of water in a water reservoir (80; 206); controlling the temperature of the water within said reservoir (80; 206) to be at a level above the initial temperature of said food products and below the temperature of said air to maintain the water vapour content of the air substantially equal to or less than that of air saturated with water vapour such that moisture carried by said recirculating air condenses onto the surface of a food product to provide rapid initial heating.

2. The method as claimed in Claim 1 wherein the step of contacting the recirculating air with the water in the water reservoir (80; 206) is carried out by forming first jets of air.

3. The method of Claim 1 or Claim 2 wherein the step of directing said recirculating air towards the surface of a food product is carried out by forming second jets of air.

4. The method of any one of Claims 1 to 3 wherein the recirculated air is further combined with relatively drier outside air to reduce the saturation of said recirculated air.

5. The method of any one of Claims 1 to 4 wherein the water vapour content of said recirculating air is maintained below its saturation point to promote condensation on the surface of food products entering said oven (20; 200) and evaporation from the surface of the food products exiting said oven.

6. The method of any one of Claims 1 to 5 wherein the recirculating air is further combined with relatively cooler outside air prior to contacting the water in said water reservoir (80; 206) to maintain the temperature of the water in said water reservoir below the temperature of said recirculating air.

7. The method of any one of Claims 1 to 6 wherein the temperature of the water in said water reservoir (80; 206) is maintained below the temperature of said recirculating air by the controlled addition of relatively colder water to said water reservoir.

8. The method of any one of Claims 1 to 7 wherein the recirculating air sequentially contacts food products moving through said oven (20; 200) in a direction countercurrent to the direction of travel of said food products such that moisture evaporated from the surface of heated food products is condensed onto the surface of cooler food products.

9. The method of any one of Claims 1 to 8, further comprising the step of heating said food products by microwave energy.

10. The method of Claim 1, further comprising the steps of: forming jets of said recirculating air after the air has been diffused at the water surface to form jets of moisture laden air; and directing said jets of moisture laden air across the surface of a food product to condense moisture onto the surface of the food product and to sweep away diffused air from which moisture has been condensed.

11. The method of Claim 10 with the addition of the steps of: circulating the air through a first compartment to condense moisture from the air on the surface of a food product; and circulating the air across the surface of a food product in a second compartment to evaporate moisture from the surface of the food product.

12. The method of Claim 11, wherein the food product is proofed dough having an initial temperature near 36.7°C (100°F); the water temperature is maintained at approximately 76.7°C (170°F) and the air temperature is about 176.7°C (350°F).

13. A convection oven (20; 200) for increasing the temperature of food products in said oven from an initial temperature to a desired higher final temperature, said oven comprising:
     (a) conveyor means (22; 204) for moving said food products through the oven;
     (b) means (210) for circulating air within said oven; and
     (c) means (86; 87) for controlling the temperature of said air to be at or above the desired final temperature of said food products; characterised by further comprising
     (d) a water reservoir (80; 206);
     (e) means (82; 212; 214) for controlling the temperature of water within said reservoir (80; 206);
     (f) means (102, 66, 202) for sequentially contacting said temperature controlled air with said water and with said food products; and
     (g) means (83; 216) for continuously controlling the temperature of water within said reservoir (80; 206) to be at a level above the initial temperature of said food products and below the temperature of said air to maintain the water vapour content of the air at a level substantially equal to or less than that of air saturated with water vapour, such that moisture carried by said recirculating air condenses onto the surface of a food product to provide rapid initial heating.

14. The oven of Claim 13 wherein said means (210) for circulating air within said oven further comprises means for contacting said air with said food products in a direction countercurrent to the direction of travel of said food products.

15. The oven of Claim 13 or Claim 14, further comprising impingement means (66; 202) for contacting said temperature controlled air with said food products.

16. The oven of any one of Claims 13 to 15, further comprising impingement means (62) for contacting said temperature controlled air with said water.

17. The oven of any one of Claims 13 to 16, further comprising means for combining said circulating air with relatively cooler outside air.

18. The oven of any one of Claims 13 to 17 wherein said means for controlling the temperature of water within said reservoir further comprises means (214) for controllably introducing relatively cooler water into said reservoir.

19. The oven of any one of Claims 13 to 18 wherein said means for controlling the temperature of water within said reservoir (80; 206) further comprises electric heating means (82; 212).

20. The oven of any one of Claims 13 to 19 further comprising microwave heating means (45).

21. The oven as claimed in Claim 13 for cooking a dough food product comprising: a cooking chamber; means maintaining air in said cooking chamber at approximately 176.7°C (350°F) with a moisture content approximately equivalent to that of air saturated with moisture at approximately 76.7°C (170°F); means for moving proofed dough into said chamber such that moisture condenses on the surface of the dough to provide initial heating; and means directing jets of air over the surface of the dough to evaporate condensed moisture and to form a crisp brown crust on the dough.

22. The oven of Claim 13, said oven further comprising: a multi-cavity cooking chamber; said conveyor means (22; 204) moving the food products through cavities in said cooking chamber; means directing jets of said air toward the surface of water in said reservoir (80; 206) to accelerate the transfer of moisture between the air and the water; and means directing jets of said air to impinge against the surface of the food product in said cavities such that moisture condenses on the surface of the food product in a first of said cavities and evaporates from the surface in a second of said cavities.

23. The oven as claimed in Claim 13 for increasing the temperature of dough food products passing through said oven from an inlet temperature to a desired higher outlet temperature, said oven (200) comprising: a cooking chamber, said air circulating means (210) circulating air in said cooking chamber; means for maintaining the temperature of air in the cooking chamber at approximately 176.7°C (350°F); means circulating air relative to water in said reservoir such that moisture condenses onto the surface of dough in the chamber until the temperature of the dough reaches approximately 76.7°C (170°F) to provide initial heating; and means (202) directing jets of air over the surface of the dough to evaporate condensed moisture after the temperature reaches 76.7°C (170°F) and to form a crust on the dough.

**Patentansprüche**

1. Verfahren zum Regeln des Wasserdampfgehalts von Umluft in einem Konvektionsofen (20; 200) für Nahrungsmittelprodukte, die eine Anfangstemperatur besitzen, wobei diese Nahrungsmittelprodukte einer Wärmebehandlung auf eine Endtemperatur unterzogen werden, und wobei sie im Zuge der Behandlung auf einem Förderer (22; 204) durch den Ofen bewegt werden, wobei das Verfahren folgende Schritte enthält: Regeln der Temperatur der Umluft, so daß sie auf oder über der gewünschten Endoberflächentemperatur für die Nahrungsmittelprodukte liegt; und Richten der Umluft zur Oberfläche eines Nahrungsmittelprodukts, gekennzeichnet durch folgende Schritte: in Berührung bringen der Umluft mit der Oberfläche von Wasser in einem Wasserbehälter (80; 206); Regeln der Temperatur des Wassers im Behälter (80; 206), so daß sie auf einem Wert oberhalb der Anfangstemperatur der Nahrungsmittelprodukte und unterhalb der Temperatur der Luft liegt, um den Wasserdampfgehalt der Luft im wesentlichen gleich oder niedriger als bei jener Luft zu halten, die mit Wasserdampf gesättigt ist, so daß die von der Umluft mitgeführte Feuchtigkeit auf der Oberfläche eines Nahrungsmittelprodukts kondensiert, um eine rasche Anfangserwärmung zu liefern.

2. Verfahren gemäß Anspruch 1, wobei der Schritt, in dem die Umluft mit dem Wasser im Wasserbehälter (80; 206) in Berührung gebracht wird, dadurch ausgeführt wird, daß erste Luftstrahlen ausgebildet werden.

3. Verfahren gemäß Anspruch 1 oder 2, wobei der Schritt, in dem die Umluft zur Oberfläche eines Nahrungsmittelprodukts gerichtet wird, dadurch ausgeführt wird, daß zweite Luftstrahlen ausgebildet werden.

4. Verfahren gemäß jedem der Ansprüche 1 bis 3, wobei die Umluft weiters mit einer relativ trockeneren Außenluft vereinigt wird, um die Sättigung der Umluft herabzusetzen.

5. Verfahren gemäß jedem der Ansprüche 1 bis 4, wobei der Wasserdampfgehalt der Umluft unterhalb seines Sättigungspunkts gehalten wird, um eine Kondensation auf der Oberfläche von Nahrungsmittelprodukten, die in den Ofen (20; 200) eintreten, und eine Verdampfung von der Oberfläche der Nahrungsmittelprodukte zu fördern, die den Ofen verlassen.

6. Verfahren gemäß jedem der Ansprüche 1 bis 5, wobei die Umluft weiters mit einer relativ kühleren Außenluft vereinigt wird, bevor sie mit dem Wasser im Wasserbehälter (80; 206) in Berührung tritt, um die Temperatur des Wassers im Wasserbehälter unterhalb der Temperatur der Umluft zu halten.

7. Verfahren gemäß jedem der Ansprüche 1 bis 6, wobei die Temperatur des Wassers im Wasserbehälter (80; 206) dadurch unterhalb der Temperatur der Umluft gehalten wird, daß dem Wasserbehälter relativ kühleres Wasser geregelt beigegeben wird.

8. Verfahren gemäß jedem der Ansprüche 1 bis 7, wobei die Umluft im Gegenstrom zur Förderrichtung der Nahrungsmittelprodukte der Reihe nach mit Nahrungsmittelprodukten in Berührung tritt, die sich durch den Ofen (20; 200) bewegen, so daß die von der Oberfläche von erwärmten Nahrungsmittelprodukten verdampfte Feuchtigkeit auf der Oberfläche von kühleren Nahrungsmittelprodukten kondensiert wird.

9. Verfahren gemäß jedem der Ansprüche 1 bis 8, wobei das Verfahren weiters einen Schritt enthält, um die Nahrungsmittelprodukte mit Mikrowellenenergie zu erwärmen.

10. Verfahren gemäß Anspruch 1, wobei das Verfahren weiters folgende Schritte enthält: Ausbilden von Umluftstrahlen, nachdem die Luft an der Wasseroberfläche verteilt wurde, um Luftstrahlen zu bilden, die mit Feuchtigkeit geladen sind; und Richten der Luftstrahlen, die mit Feuchtigkeit geladen sind, über die Oberfläche eines Nahrungsmittelprodukts, um die Feuchtigkeit auf der Oberfläche des Nahrungsmittelprodukts zu kondensieren und verteilte Luft wegzuspülen, aus der die Feuchtigkeit kondensiert ist.

11. Verfahren gemäß Anspruch 10, wobei das Verfahren zusätzlich folgende Schritte enthält: in Umlauf bringen der Luft durch ein erstes Abteil, um Feuchtigkeit von der Luft auf der Oberfläche eines Nahrungsmittelprodukts zu kondensieren; und in Umlauf bringen der Luft über die Oberfläche eines Nahrungsmittelprodukts in einem zweiten Abteil, um Feuchtigkeit von der Oberfläche des Nahrungsmittelprodukts zu verdampfen.

12. Verfahren gemäß Anspruch 11, wobei das Nahrungsmittelprodukt ein fester Teig ist, dessen Anfangstemperatur in der Nähe von 36,7°C (100°F) liegt; wobei die Wassertemperatur auf etwa 76,7°C (170°F) und die Lufttemperatur auf etwa 176,7°C (350°F) gehalten werden.

13. Konvektionsofen (20; 200), um die Temperatur von Nahrungsmittelprodukten im Ofen von einer Anfangstemperatur auf eine gewünschte höhere Endtemperatur anzuheben, wobei der Ofen enthält:
   (a) eine Fördereinrichtung (22; 204), um die Nahrungsmittelprodukte durch den Ofen zu bewegen;
   (b) eine Einrichtung (210), um Luft im Ofen in Umlauf zu bringen; und
   (c) eine Einrichtung (86; 87), um die Temperatur der Luft so zu regeln, daß sie auf oder über der gewünschten Endtemperatur der Nahrungsmittelprodukte liegt;
   dadurch gekennzeichnet, daß der Ofen weiters enthält:
   (d) einen Wasserbehälter (80; 206);
   (e) eine Einrichtung (82; 212; 214), um die Temperatur von Wasser im Behälter (80;

206) zu regeln;

(f) eine Einrichtung (102; 66; 202), um der Reihe nach die temperaturgeregelte Luft mit dem Wasser und mit den Nahrungsmittelprodukten in Berührung zu bringen; und

(g) eine Einrichtung (83; 216), um fortlaufend die Temperatur des Wassers im Behälter (80; 206) so zu regeln, daß sie auf einem Wert oberhalb der Anfangstemperatur der Nahrungsmittelprodukte sowie unterhalb der Temperatur der Luft liegt, um den Wasserdampfgehalt der Luft auf einem Wert zu halten, der im wesentlichen gleich oder niedriger als der Wert von Luft ist, die mit Wasserdampf gesättigt ist, so daß die von der Umluft mitgeführte Feuchtigkeit auf der Oberfläche eines Nahrungsmittelprodukts kondensiert, um eine rasche Anfangserwärmung zu liefern.

14. Ofen gemäß Anspruch 13, wobei die Einrichtung (210), um Luft im Ofen in Umlauf zu bringen, weiters eine Einrichtung enthält, um die Luft mit den Nahrungsmittelprodukten im Gegenstrom zur Förderrichtung der Nahrungsmittelprodukte in Berührung zu bringen.

15. Ofen gemäß Anspruch 13 oder 14, wobei der Ofen weiters eine Auftreffeinrichtung (66; 202) enthält, um die temperaturgeregelte Luft mit den Nahrungsmittelprodukten in Berührung zu bringen.

16. Ofen gemäß jedem der Ansprüche 13 bis 15, wobei der Ofen weiters eine Auftreffeinrichtung (62) enthält, um die temperaturgeregelte Luft mit dem Wasser in Berührung zu bringen.

17. Ofen gemäß jedem der Ansprüche 13 bis 16, wobei der Ofen weiters eine Einrichtung enthält, um die Umluft mit einer relativ kühleren Außenluft zu vereinigen.

18. Ofen gemäß jedem der Ansprüche 13 bis 17, wobei die Einrichtung zur Temperaturregelung des Wassers im Behälter weiters eine Einrichtung (214) enthält, um relativ kühleres Wasser geregelt in den Behälter einzuleiten.

19. Ofen gemäß jedem der Ansprüche 13 bis 18, wobei die Einrichtung zur Temperaturregelung des Wassers im Behälter (80; 206) weiters eine elektrische Heizeinrichtung (82; 212) enthält.

20. Ofen gemäß jedem der Ansprüche 13 bis 19, wobei der Ofen weiters eine Mikrowellenheizeinrichtung (45) enthält.

21. Ofen gemäß Anspruch 13 zum Kochen oder Backen eines teigigen Nahrungsmittelprodukts, wobei der Ofen enthält: eine Kochkammer; eine Einrichtung, die die Luft in der Kochkammer auf etwa 176,7°C (350°F) mit einem Feuchtigkeitsgehalt hält, der etwa gleich dem Feuchtigkeitsgehalt von Luft ist, die bei etwa 76,7°C (170°F) mit Feuchtigkeit gesättigt ist; eine Einrichtung, um festen Teig so in die Kammer zu bewegen, daß die Feuchtigkeit auf der Oberfläche des Teigs kondensiert, um eine Anfangserwärmung zu liefern; sowie eine Einrichtung, um Luftstrahlen über die Oberfläche des Teigs zu richten, um kondensierte Feuchtigkeit zu verdampfen und auf dem Teig eine knusprige, braune Kruste auszubilden.

22. Ofen gemäß Anspruch 13, wobei der Ofen weiters enthält: eine Mehrraum-Kochkammer; wobei die Fördereinrichtung (22; 204) die Nahrungsmittelprodukte durch die Räume in der Kochkammer bewegt; eine Einrichtung, um Luftstrahlen zur Oberfläche des Wassers im Behälter (80; 206) zu richten, um die Übertragung von Feuchtigkeit zwischen der Luft und dem Wasser zu beschleunigen; sowie eine Einrichtung, um Luftstrahlen so zu richten, daß sie in den Räumen auf der Oberfläche des Nahrungsmittelprodukts auftreffen, so daß die Feuchtigkeit auf der Oberfläche des Nahrungsmittelprodukts in einem ersten Raum kondensiert und von der Oberfläche in einem zweiten Raum verdampft.

23. Ofen gemäß Anspruch 13, um die Temperatur von teigigen Nahrungsmittelprodukten, die den Ofen durchlaufen, von einer Einlaßtemperatur auf eine gewünschte höhere Auslaßtemperatur anzuheben, wobei der Ofen (200) enthält: eine Kochkammer, wobei die Umlufteinrichtung (210) die Luft in der Kochkammer in Umlauf versetzt; eine Einrichtung, um die Lufttemperatur in der Kochkammer auf etwa 176,7°C (350°F) zu halten; eine Einrichtung, um Luft relativ zum Wasser im Behälter so in Umlauf zu versetzen, daß die Feuchtigkeit auf der Oberfläche des Teigs in der Kammer kondensiert, bis die Temperatur des Teigs etwa 76,7°C (170°F) erreicht, um eine Anfangserwärmung zu liefern; sowie eine Einrichtung (202), um Luftstrahlen über die Oberfläche des Teigs zu richten, um kondensierte Feuchtigkeit zu verdampfen, nachdem die Temperatur 76,7°C (170°F) erreicht, und auf dem Teig eine Kruste auszubilden.

**Revendications**

1. Procédé pour régler la teneur en vapeur d'eau d'un air en recirculation dans un four à convection (20; 200) pour des denrées alimentaires possédant une température initiale, lesquels produits alimentaires sont soumis à un traitement thermique jusqu'à une température finale et, au cours du traitement, sont déplacés dans le four sur un convoyeur (22;204), ledit procédé comprenant les étapes consistant à : régler la température dudit air en recirculation de manière qu'elle soit égale ou supérieure à la température superficielle finale désirée des denrées alimentaires; et diriger ledit air en recirculation sur la surface d'une denrée alimentaire, caractérisé par les étapes consistant à amener ledit air en recirculation en contact avec la surface de l'eau dans un réservoir d'eau (80;206); régler la température de l'eau dans ledit réservoir (80;206) de manière qu'elle soit à un niveau supérieur à la température initiale desdites denrées alimentaires et inférieure à la température dudit air pour maintenir la teneur en vapeur d'eau de l'air sensiblement égale ou inférieure à celui de l'air saturé de vapeur d'eau de manière que l'humidité véhiculée par ledit air en recirculation se condense sur la surface d'une denrée alimentaire pour réaliser un chauffage initial rapide.

2. Procédé selon la revendication 1, selon lequel l'étape de mise en contact de l'air en recirculation avec l'eau dans le réservoir d'eau (80;206) est exécutée au moyen de la formation de premiers jets d'air.

3. Procédé selon la revendication 1 ou 2, selon lequel l'étape consistant à diriger ledit air en recirculation sur la surface d'une denrée alimentaire est exécutée au moyen de la formation de seconds jets d'air.

4. Procédé selon l'une quelconque des revendications 1 à 3, selon lequel l'air en recirculation est en outre combiné à de l'air extérieur relativement plus sec afin de réduire la saturation dudit air en recirculation.

5. Procédé selon l'une quelconque des revendications 1 à 4, selon lequel la teneur en vapeur d'eau dudit air en recirculation est maintenue inférieure à son point de saturation de manière à favoriser la condensation sur la surface de denrées alimentaires pénétrant dans ledit four (20;200) et l'évaporation à partir de la surface des denrées alimentaires sortant dudit four.

6. Procédé selon l'une quelconque des revendications 1 à 5, selon lequel l'air en recirculation est en outre combiné à de l'air extérieur relativement plus froid, avant sa venue en contact avec l'eau située dans ledit réservoir d'eau (80;206) pour maintenir la température de l'eau dans ledit réservoir d'eau à une valeur inférieure à la température dudit air en recirculation.

7. Procédé selon l'une quelconque des revendications 1 à 6, selon lequel la température de l'eau dans ledit réservoir d'eau (80;206) est maintenue inférieure à la température dudit air en recirculation au moyen de l'addition commandée d'eau relativement plus froide dans ledit réservoir d'eau.

8. Procédé selon l'une quelconque des revendications 1 à 7, selon lequel l'air en recirculation vient successivement en contact avec des denrées alimentaires se déplaçant dans ledit four (20;200) dans une direction à contre-courant de la direction de déplacement desdites denrées alimentaires de sorte que l'humidité s'évaporant à partir de la surface de denrées alimentaires chauffées se condense sur la surface de denrées alimentaires plus froides.

9. Procédé selon l'une quelconque des revendications 1 à 8, comprenant en outre l'étape consistant à chauffer lesdites denrées alimentaires au moyen d'une énergie à micro-ondes.

10. Procédé selon la revendication 1, comprenant en outre les étapes consistant à : former des jets dudit air en recirculation une fois que l'air a diffusé à la surface de l'eau pour former des jets d'air chargés d'humidité; et diriger lesdits jets d'air chargés d'humidité sur la surface d'une denrée alimentaire pour condenser l'humidité sur la surface de cette denrée alimentaire et évacuer par balayage l'air diffusé, dont l'humidité s'est condensée.

11. Procédé selon la revendication 10, comprenant l'addition des étapes consistant à : faire circuler l'air dans un premier compartiment pour condenser l'humidité de l'air sur la surface d'une denrée alimentaire; et faire circuler l'air sur la surface d'une denrée alimentaire dans un second compartiment pour évaporer l'humidité de la surface de la denrée alimentaire.

12. Procédé selon la revendication 11 selon lequel la denrée alimentaire est une pâte enduite possédant une température initiale proche de 36,7°C (100°F); la température de l'eau est maintenue à environ 76,7°C (170°F) et la température de l'air est égale à environ 176,7°C (350°F).

**13.** Four à convection (20;200) servant à accroître la température de denrées alimentaires dans ledit four depuis une température initiale jusqu'à une température finale supérieure désirée, ledit four comprenant :

(a) des moyens convoyeurs (22;204) pour déplacer lesdites denrées alimentaires dans le four;

(b) des moyens (210) pour faire circuler l'air dans ledit four; et

(c) des moyens (86;87) pour régler la température dudit air de manière qu'elle soit égale ou supérieure à la température finale désirée desdites denrées alimentaires; caractérisé en ce qu'il comprend en outre

(d) un réservoir d'eau (80;206);

(e) des moyens (82;212;214) pour régler la température de l'eau dans ledit réservoir (80;206);

(f) des moyens (102,66,202) pour amener ledit air, dont la température est réglée, successivement en contact avec ladite eau et avec lesdites denrées alimentaires; et

(g) des moyens (83;216) pour régler en continu la température de l'eau dans ledit réservoir (80;206) pour qu'elle soit à un niveau supérieur à la température initiale desdites denrées alimentaires et inférieure à la température dudit air afin de maintenir la teneur en vapeur d'eau de l'air à un niveau sensiblement égal ou inférieur à celui de l'air saturé de vapeur d'eau, de manière que l'humidité véhiculée par ledit air en recirculation se condense sur la surface d'une denrée alimentaire pour réaliser un chauffage initial rapide.

**14.** Four selon la revendication 13, dans lequel lesdits moyens (210) pour faire circuler l'air dans ledit four comprennent en outre des moyens pour amener ledit air en contact avec lesdites denrées alimentaires dans une direction à contre-courant de la direction de déplacement desdites denrées alimentaires.

**15.** Four selon la revendication 13 ou 14, comprenant en outre des moyens de projection (66;202) pour amener ledit air, dont la température est réglée, en contact avec lesdites denrées alimentaires.

**16.** Four selon l'une quelconque des revendications 13 à 15, comprenant en outre des moyens de projection (62) pour amener l'air, dont la température est réglée, en contact avec ladite eau.

**17.** Four selon l'une quelconque des revendications 13 à 16, comprenant en outre des moyens pour combiner ledit air en circulation à un air extérieur relativement plus froid.

**18.** Four selon l'une quelconque des revendications 13 à 17, dans lequel lesdits moyens pour régler la température de l'eau dans ledit réservoir comprennent en outre des moyens (214) pour introduire, d'une manière commandée, de l'eau relativement plus froide dans ledit réservoir.

**19.** Four selon l'une quelconque des revendications 13 à 18, dans lequel lesdits moyens de réglage de la température de l'eau dans ledit réservoir (80;206) comprennent en outre des moyens de chauffage électrique (82;212).

**20.** Four selon l'une quelconque des revendications 13 à 19, comprenant en outre des moyens de chauffage à micro-ondes (45).

**21.** Four selon la revendication 13 pour cuire une denrée alimentaire à l'état de pâte, comprenant: une chambre de cuisson; des moyens maintenant l'air présent dans ladite chambre de cuisson à environ 176,7°C (350°F) avec une teneur en humidité approximativement équivalente à celle de l'air saturé d'humidité à environ 76,7°C (170°F); des moyens pour introduire la pâte enduite dans ladite chambre de manière que l'humidité se condense sur la surface de la pâte pour réaliser un chauffage initial; et des moyens pour diriger des jets d'air sur la surface de la pâte de manière à évaporer l'humidité condensée et former une croûte marron croustillante sur la pâte.

**22.** Four selon la revendication 13, ledit four comprenant en outre: une chambre de cuisson à cavités multiples; lesdits moyens convoyeurs (22;204) déplaçant les denrées alimentaires à travers les cavités dans ladite chambre; des moyens dirigeant des jets dudit air sur la surface de l'eau dans ledit réservoir (80;206) pour accélérer le transfert d'humidité entre l'air et l'eau; et des moyens dirigeant des jets dudit air pour qu'ils frappent la surface de la denrée alimentaire dans lesdites cavités de manière que l'humidité se condense sur la surface de la denrée alimentaire dans une première desdites cavités et s'évapore de la surface dans une seconde desdites cavités.

**23.** Four selon la revendication 13, pour accroître la température de denrées alimentaires à l'état de pâte traversant ledit four, depuis une température d'entrée jusqu'à une température de sortie supérieure désirée, ledit four (200) comprenant: une chambre de cuisson, lesdits moyens (210) de mise en circulation de l'air faisant circuler l'air dans ladite chambre de cuisson; des moyens pour maintenir la température de l'air dans la chambre de cuisson à environ 176,7°C (350°F); des moyens faisant circuler l'air par rapport à l'eau dans ledit réservoir de manière que l'humidité se condense sur la surface de la pâte dans la chambre jusqu'à ce que la température de la pâte atteigne environ 76,7°C (170°F) pour réaliser un chauffage initial; et des moyens (202) dirigeant des jets d'air sur la surface de la pâte pour évaporer l'humidité condensée lorsque la température atteint 76,7°C (170°F) et former une croûte sur la pâte.

EP 0 208 769 B1

FIG. 1

$x°F = 5/9(x-32)°C$

1cu. ft. per lb. $= 62·44 \, cm^3 kg^{-1}$

FIG. 2

14

FIG. 3

FIG. 4

FIG. 5

FIG. 6

FIG. 7

EP 0 208 769 B1

FIG. 8

EP 0 208 769 B1

FIG. 9

EP 0 208 769 B1

FIG. 10

FIG. 11

1 BTU / HR / SQ. FT. / °F = 567·7 Wm$^{-2}$°C$^{-1}$
1 in. = 2·54 cm.

10
21.6
38
67
NO WATER ADDED
FIG. 12A (200°F.) 93.3°C

33
53
70
WATER TEMP. (187°F.) 86°C
FIG. 12B